# EUROPEAN PATENT APPLICATION

(11) **EP 1 736 557 A1**
(43) Date of publication of application: **27.12.2006**
(21) Application number: 04792287.7
(22) Date of filing: 13.10.2004
(51) Int. Cl.: C22B 34/12

(54) **PROCESS FOR PRODUCING Ti OR Ti ALLOY THROUGH Ca REDUCTION**

(30) Priority: 01.03.2004 JP 2004056245
(71) Applicant: Sumitomo Titanium Corporation, Amagasaki-shi, Hyogo 660-8533 (JP)
(72) Inventor: OGASAWARA, Tadashi, Amagasaki-shi, Hyogo 6608533 (JP); YAMAGUCHI, Makoto, Amagasaki-shi, Hyogo 6608533 (JP); HORI, Masahiko, Amagasaki-shi, Hyogo 6608533 (JP); UENISHI, Toru, Amagasaki-shi, Hyogo 6608533 (JP); TAKEMURA, Kazuo, Amagasaki-shi, Hyogo 6608533 (JP)
(74) Representative: Uchida, Kenji
(86) International application number: PCT/JP2004/015043
(87) International publication number: WO 2005/083135

(57) **Abstract**

A mixed molten salt containing CaCl₂ and NaCl is held in the reactor cell 1 at a temperature not more than 600 °C. TiCl₄ which is of a Ti raw material is introduced into the reactor cell 1 while Na is introduced into the reactor cell 1. Na introduced into the reactor cell 1 is replaced by Ca, Ca is dissolved in the molten salt, Ca reduces TiCl₄ introduced into the reactor cell 1, and thereby Ti particles are generated. The generated Ti particles are introduced to a separation cell 2 along with the molten salt, and the Ti particles and Na are separated from the molten salt. The residual molten salt is introduced to an electrolytic cell 3 to generate Na by high-temperature electrolysis at the temperature more than 600 °C. The generated Na is returned to the reactor cell 1 to replenish Na consumed in the reactor cell 1. The highly reactive Ca is not directly handled, and Na which is easy to handle is used in a circulating manner. Therefore, the Ti or Ti alloy can economically be produced by Ca reduction.

## Description

### TECHNICAL FIELD

The present invention relates to a method for producing Ti or Ti alloys through reduction by Ca, in which a metallic chloride containing TiCl₄ is reduced by Ca to produce metallic Ti or the Ti alloys.

### BACKGROUND ART

A Kroll method for reducing TiCl₄ by Mg is generally used as an industrial production method of the metallic Ti. In the Kroll method, the metallic Ti is produced through a reduction step and a vacuum separation step. In the reduction step, TiCl₄ which is of a raw material of Ti is reduced in a reactor vessel to produce the sponge metallic Ti. In the vacuum separation step, unreacted Mg and MgCl₂ formed as a by-product are removed from the sponge metallic Ti produced in the reactor vessel.

In order to explain the reduction step in detail, in the reduction step, the reactor vessel is filled with the molten Mg, and the TiCl₄ liquid is supplied from above a liquid surface of the molten Mg. This allows TiCl₄ to be reduced by Mg near the liquid surface of the molten Mg to generate the particulate metallic Ti. The generated metallic Ti sequentially moves downward. At the same time, the molten MgCl₂ which is of the by-product is generated near the liquid surface. A specific gravity of molten MgCl₂ is larger than that of the molten Mg. The molten MgCl₂ which is of the by-product moves downward due to the specific-gravity difference, and the molten Mg emerges in the liquid surface instead. The molten Mg is continuously supplied to the liquid surface by the specific-gravity difference substitution, and the reaction is continued.

In the metallic Ti production by the Kroll method, a high-purity product can be produced. However, because the product is produced in a batch manner, production cost is increased and product becomes remarkably expensive. One of factors of increased production cost is the difficulty of enhancing a feed rate of TiCl₄. The following three items are cited as the reason why the feed rate of TiCl₄ is restricted.

In order to improve productivity in the Kroll method, it is effective to increase the feed rate of TiCl₄ which is of the raw material of Ti, i.e., to increase a supply amount of molten Mg to the liquid surface per unit area or unit time. However, when the feed rate is excessively increased, because deprivation of heat is too late for the reducing reaction created in the liquid surface of the molten Mg, a temperature of the molten MgCl₂ generated in the liquid surface by the reaction is increased, and the specific gravity of the molten MgCl₂ is decreased and brought close to the specific gravity of Mg. Therefore, the rate of the specific-gravity difference substitution cannot respond to the reaction rate, MgCl₂ remains in the liquid surface, and TiCl₄ is supplied to the MgCl₂, which reduces utilization efficiency of TiCl₄. As a result, the supplied raw material becomes unreacted generation gases (referred to as unreacted gas) such as an unreacted TiCl₄ gas and an unreacted TiCl₃ gas, and the unreacted gas is discharged outside the reactor vessel. It is necessary to avoid the generation of the unreacted gas, because a rapid increase in inner pressure of the reactor vessel is associated with the generation of the unreacted gas. Because of the above reasons, there is a limit of the feed rate of TiCl₄ which is of the raw material of Ti.

When the feed rate of TiCl₄ is increased, a precipitation amount of Ti is increased in the inner surface of the reactor vessel above the liquid surface. As the reducing reaction proceeds, the liquid surface of the molten Mg rises intermittently. Therefore, the precipitated Ti in the inner surface of the upper portion of the reactor vessel is immersed in the molten Mg in a late stage of the reducing reaction, which causes the effective area of the Mg liquid surface to be decreased to reduce the reaction rate. In order to suppress the reduction of reaction rate, it is necessary that the feed rate of TiCl₄ be restricted to prevent the Ti precipitation in the inner surface of the upper portion of the reactor vessel. Japanese Patent Application Publication No. 8-295955 proposes a countermeasure for suppressing the Ti precipitation in the inner surface of the upper portion of the reactor vessel. However, the countermeasure proposed in Japanese Patent Application Publication No. 8-295955 is not sufficient.

In the Kroll method, because the reaction is performed only near the liquid surface of the molten Mg solution in the reactor vessel, an exothermic area is narrowed. Therefore, when TiCl₄ is supplied at a high rate, cooling cannot keep up with the supply of TiCl₄ in the reaction area. This also causes the feed rate of TiCl₄ to be restricted.

Although the feed rate of TiCl₄ is not directly affected, in the Kroll method, Ti is generated in the particulate form near the liquid surface of the molten Mg solution, and Ti moves downward. However, because of wetting properties (adhesion properties) of the molten Mg, the generated Ti powder moves downward while aggregated, and the Ti particles are sintered to grow in size of the Ti particles due to the temperature of the molten solution during moving downward, which makes it difficult to retrieve the Ti particles toward the outside of the reactor vessel. Therefore, in the Kroll method, the continuous production is difficult to be performed, and the improvement of the productivity is blocked. This is the reason why Ti is produced in the batch manner in the form of the sponge titanium by the Kroll method.

With reference to the Ti production methods except for the Kroll method, for example, US Patent No. 2205854 describes that, in addition to Mg, for example, Ca can be used as the reducing agent of TiCl₄. US Patent No. 4820339 describes a method for producing Ti through the reducing reaction by Ca, in which the molten salt of CaCl₂ is held in the reactor vessel, the metallic Ca powder is supplied into the molten salt from above, Ca is dissolved in the molten salt, and the TiCl₄ gas is supplied from below to react the dissolved Ca with TiCl₄ in the molten salt of CaCl₂.

In the reduction by Ca, the metallic Ti is generated from TiCl₄ by the reaction of the following chemical formula (1), and CaCl₂ which is of the by-product is also generated at the same time. Ca has a stronger affinity for Cl than Mg has, and Ca is suitable for the reducing agent of TiCl₄ in principle. Particularly, in the method described in US Patent No. 4820339, Ca is used while dissolved in the molten CaCl₂. When the reducing reaction by Ca is utilized in the molten CaCl₂, a reaction field is enlarged compared with the Kroll method in which TiCl₄ is supplied to the liquid surface of the reducing agent in the reactor vessel. Therefore, because the exothermic area is also enlarged to facilitate the cooling, the feed rate of TiCl₄ which is of the raw material of Ti can be largely increased, and the remarkable improvement of the productivity can be also expected.

TiCl₄+2Ca→Ti+2CaCl₂ (1)

However, it is difficult that the method described in US Patent No. 4820339 is adopted as the industrial Ti production method. This is because the highly expensive metallic Ca powder is used in order to dissolve Ca in the molten salt of CaCl₂. That is, since the production cost is higher than that of the Kroll method in which the feed rate of TiCl₄ is restricted. In addition, the highly reactive Ca is extremely difficult to handle, which can also be the factor of blocking the industrial application of the method for producing Ti through the reduction by Ca.

An example of other Ti production methods includes an Olsen method described in US Patent No. 2845386. The Olsen method is a kind of oxide direct-reduction method for directly reducing TiO₂ by Ca, in which TiO₂ is directly reduced by Ca not through TiCl₄. Although the oxide direct-reduction method is highly efficient, the oxide direct-reduction method is not suitable for the production of the high-purity Ti because it is necessary to use expensive high-purity TiO₂.

### DISCLOSURE OF THE INVENTION

It is an object of the present invention to provide a method for economically producing a high-purity metallic Ti or a high-purity Ti alloys with high efficiency without using an expensive reducing agent.

In order to achieve the above object, the present inventors consider that the reduction of TiCl₄ by Ca is indispensable, and the present inventors propose utilization of Ca dissolved in the molten salt of CaCl₂ as described in US Patent No. 4820339.

In the case where Ti is produced by the Ca reduction, Ca in the molten salt is consumed as the reaction expressed by the chemical formula
(1) proceeds in the reducing reactor vessel, and it is necessary to continuously supply the metallic Ca powder to the reducing reactor vessel in the method described in US Patent No. 4820339.

In order to industrially establish the method for producing Ti through reduction by Ca, the present inventors focus on a reversible reaction shown in chemical formulas (2) and (3) as means for replenishing Ca in consideration of the fact that it is necessary that the Ca consumed by the reducing reaction is economically replenished into the molten salt.

2Na+CaCl₂→Ca+2NaCl (T≤600°C) (2)

Ca+2NaCl→2Na+CaCl₂ (T>600°C) (3)

A Hunter method in which TiCl₄ is reduced by Na can be cited as an example of the Ti production method in which the reduction is utilized. Na and NaCl have low reactivity, and Na and NaCl are easy to handle compared with Ca and CaCl₂, so that the NaCl electrolysis and the Na electrolytic production utilizing the NaCl electrolysis has already industrially been established. However, in the Hunter method in which Na reduction is used, the chlorides of bivalent and trivalent Ti are generated by the Na reduction. The chlorides of bivalent and trivalent Ti decrease generation efficiency. In addition, because the chlorides of bivalent and trivalent Ti are dissolved in the molten salt, when the molten salt is reused in the electrolysis, the oxidation and reducing reactions are generated between the chlorides of bivalent and trivalent Ti to largely decrease the generation efficiency (current efficiency) of Na. Therefore, it is difficult to directly reduce TiCl₄ by Na, and it is necessary to perform multi-process treatment, so that Ti is hardly produced at low cost.

The present inventors found that the reversible reaction expressed by the chemical formulas (2) and (3) when the metallic Na is mixed with CaCl₂. The utilization of this phenomenon enables the direct reduction of TiCl₄ by Ca without generating the chlorides of bivalent and trivalent Ti.

The detail will be described below. That is, in the method for producing the metallic Ti through the reduction by Ca, basically CaCl₂ having a melting point of 780 °C is used as the molten salt. However, like a binary system molten salt such as CaCl₂-NaCl and CaCl₂-KCl and a ternary system molten salt such as CaCl₂-NaCl-KCl, at least one of NaCl, KCl, LiCl, and CaF₂ is mixed into CaCl₂ to form a multi-system molten salt, which allows the melting point of the salt to be lowered to decrease the temperature of the molten salt. As a result, the burden of a reactor material can be reduced to achieve the cost reduction of the reactor material, and the vaporization of Ca or salt can also be suppressed from the liquid surface.

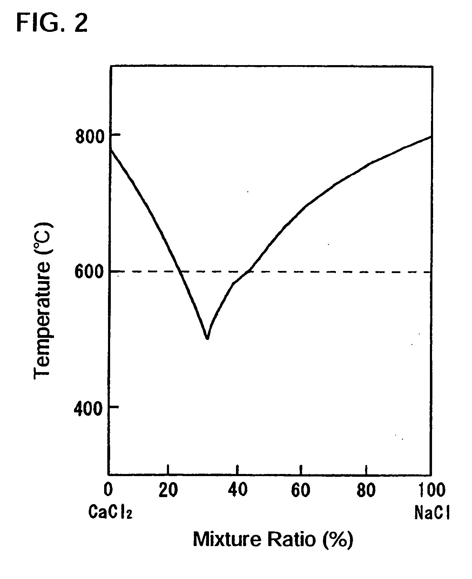

The mixed molten salt in which NaCl is added to CaCl₂ is particularly distinctive among the multi-system molten salts. Fig. 2 shows a relationship between a mixture ratio and a melting point in a binary system molten salt of CaCl₂ and NaCl. The melting point of CaCl₂ is singly about 780 °C, while the melting point of NaCl is singly over 800 °C. However, when CaCl₂ and NaCl are mixed together, the melting point is decreased to about 500 °C at the minimum. The melting point of mixed salt becomes not more than 600 °C when the mixture ratio of NaCl ranges from about 20% to 45%.

In the multi-system mixed molten salt such as CaCl₂-Nacl and CaCl₂-NaCl-KCl containing CaCl₂ and NaCl, as shown in the chemical formulas (2) and (3), Ca substitutes for the saturated metal at temperatures of not more than 600 °C while the saturated metal exists as Na at molten salt temperatures of more than 600 °C. When Na is charged in the CaCl₂ containing molten salt having temperature of not more than 600 °C, Na substitutes Ca to form the molten salt in which Ca is dispersed in CaCl₂. Then, when the TiCl₄ is supplied into the molten salt, TiCl₄ is subjected to the reducing process by the dissolved Ca.

Thus, when Na is added to the CaCl₂ containing molten salt which is kept at the temperatures of not more than 600 °C, the highly reactive molten salt in which Ca is dissolved in CaCl₂ is generated without directly handling the highly reactive Ca, which allows TiCl₄ to be directly reduced by Ca without generating the chlorides of bivalent and trivalent Ti.

The present invention is developed based on the above consideration, the present invention is a method for producing Ti or Ti alloys through reduction by Ca, characterized by including a Ca generation step by Na introduction, in which Ca is generated by introducing Na into molten salt containing CaCl₂, the molten salt being kept at temperatures of not more than 600 °C; a Ti generation step by a reducing reaction, in which Ti or the Ti alloy is generated in the molten salt by supplying metallic chloride containing TiCl₄ into the molten salt to cause the metallic chloride to react with Ca generated in the molten salt; and a Ti separation step in which the Ti or Ti alloy generated in the molten salt is separated from the molten salt.

In the method of the present invention for producing Ti or Ti alloys through reduction by Ca, for example, the molten CaCl₂ which is of the molten salt is held in the reactor cell. However, for example, a mixed molten salt with NaCl is used as the molten salt such that the melting point becomes not more than 600 °C (see Fig. 2). When Na is charged into the molten salt (kept at temperatures of not more than 600 °C), Na substitutes for Ca, and Ca is dissolved in the molten salt (CaCl₂) unlike Na. In this state of things, for example, when TiCl₄ is supplied to the molten salt, TiCl₄ is reduced by Ca dissolved in the molten salt, and powdery and/or particulate metallic Ti (hereinafter collectively referred to as Ti particles). The generated metallic Ti is separated from the molten salt to perform the direct reduction by Ca without generating the chlorides of bivalent and trivalent Ti.

Thus, the metallic Ti can extremely economically and efficiently be produced by the reduction not only without replenishing the metallic Ca but without solely handling Ca.

Further, in generating the Ti particles through the reduction by Ca in the molten salt, the reducing reaction field is widened and the heat generation area is simultaneously widened. Mg has vapor pressure of 6.7 kPa (50 mmHg) at 850 °C while Ca has extremely small vapor pressure of 0.3 kPa (2 mmHg). Therefore, in the case where Ca is used for the reduction, the Ti precipitation amount becomes dramatically lessened in the inner surface of the upper portion of the reactor cell when compared with the use of Mg. Accordingly, in the method of the present invention for producing Ti or Ti alloys through reduction by Ca, the feed rate of TiCl₄ can largely be increased.

In addition, Ca is inferior in wetting properties (adhesion properties) to Mg, and Ca adhering to the precipitated Ti particles is dissolved in CaCl₂, so that the aggregation in the generated titanium particles and the sintering are significantly lessened. Therefore, the generated Ti can be taken out in the particulate state from the reactor vessel, and the Ti production can continuously be operated.

In the method of the present invention for producing Ti or Ti alloys through reduction by Ca, the Ca generation by the Na introduction and the Ti generation by the reducing reaction can be performed in the same reactor cell. Therefore, an equipment configuration is simplified to further improve economic efficiency.

Na used for the Ca generation can be generated by electrolysis (electrolytic step) of the molten salt containing NaCl. The Na electrolytic production is a technology which has been already established, and the Na electrolytic production has the excellent economic efficiency. Accordingly, when the molten salt which is already used for the Ti generation is introduced to the electrolytic step (for example, molten salt separated from the generated Ti), the Ca supply source such as the molten salt (CaCl₂) and Na can be circulated to economically produce Ti or the Ti alloys.

In the Na electrolytic production (electrolytic step), Na is generated by the reaction shown in chemical formulas (4) and (5).

2Cl⁻→2e⁻+Cl2 (anode electrode) (4)

Na⁺+2e⁻→2Na (cathode electrode) (5)

In the electrolytic step, it should be considered that Na is generated while the temperature of the molten salt is held at more than 600°C. When the temperature of the molten salt is held not more than 600°C in the electrolytic step, Ca is generated. In the electrolytic step, it should also be considered that the back reaction is prevented. In the back reaction, Na generated on the cathode electrode side or the unreacted mixed Na combines with Cl₂ generated on the anode electrode side to thereby return to NaCl. When the back reaction is generated, current efficiency is decreased because electrolytic current is consumed for the back reaction.

It is effective that a membrane is provided to partition the electrolytic cell into the anode electrode side and the cathode electrode side for preventing the back reaction in which Na generated on the cathode electrode side combines with Cl₂ generated on the anode electrode side to thereby return to NaCl. The membrane permits the molten salt to be circulated in the electrolytic cell while blocking the movement of Na generated on the cathode electrode side to the anode electrode side. It is effective to combine the membrane with a unidirectional flow of the molten salt from the anode electrode side toward the cathode electrode side in the reactor cell.

In the case where the molten salt which is already used for the Ti generation is introduced to the electrolytic step, there is a fear that the unreacted Ca contained in the molten salt is mixed into the electrolytic step. When the unreacted Ca is mixed in the electrolytic step (more than 600 °C), Ca returns to Na to generate the back reaction in which Na combines with Cl₂ generated on the anode electrode side to return to NaCl. For a measure against the back reaction, it is effective that the temperature of the molten salt which is already used for the Ti generation is temporarily raised to more than 600 °C outside the electrolytic cell before the molten salt is introduced to the electrolytic cell. Therefore, in the unreacted dissolved metal in the molten salt, Ca which is dissolved in the molten salt is replaced by Na which is hardly dissolved in the molten salt, and Na can be separated and removed. Then, the molten salt is introduced to the electrolytic cell after Na is separated and removed, which prevents the mixture of the unreacted Na and the back reaction caused by the unreacted Na.

In the electrolytic step, the molten salt temperature is also held at more than 600 °C, so that the economic efficiency does not particularly become worsened even if the molten salt is heated to the temperature of more than 600 °C in the Na separation step.

For a supply mode of TiCl₄ to the molten salt, it is particularly preferable that TiCl₄ be directly supplied in the gas state to the molten salt because of high contact efficiency of TiCl₄ with Ca in the molten salt. It is also possible that a TiCl₄ liquid is supplied to the molten salt, and it is also possible that the liquid or gaseous TiCl₄ is supplied to the liquid surface of the molten salt.

Furthermore, for the supply of TiCl₄, in the method for reducing TiCl₄ by Ca, there are various advantages compared with the Kroll method in which the reduction is performed by Mg.

In the Kroll method in which the reduction is performed by Mg, the TiCl₄ liquid is supplied to the liquid surface of the molten Mg solution. Conventionally it is tried that the TiCl₄ gas is supplied into the molten Mg solution in order to enlarge a reaction field. However, as described above, since the Mg has the large vapor pressure, Mg vapor intrudes in a supply nozzle to react with TiCl₄, and a supply pipe is choked. The problem of nozzle choking still remains even if the TiCl₄ gas is supplied deep into the molten salt. This is attributed to the fact that the melt is agitated by bubbling of TiCl₄ and sometimes the molten Mg reaches the supply nozzle, although a choking frequency of the supply pipe is decreased. As much as anything, even if TiCl₄ is supplied to the molten salt, the Ti precipitation reaction is difficult to occur because Mg is not dissolved in the molten salt.

On the contrary, in the method of reducing TiCl₄ by Ca, the nozzle choking is hardly generated when the TiCl₄ gas is supplied into the molten salt. Therefore, the TiCl₄ gas can be supplied into the molten salt. One of the reasons why the nozzle choking is hardly generated is that the molten Ca has the small vapor pressure.

That is, in the method of the present invention for producing Ti or the Ti alloys which is of a method for reducing TiCl₄ by Ca, it is preferable that the gaseous or liquid TiCl₄ be directly supplied into the molten salt, it is particularly preferable that TiCl₄ be directly supplied in the gas state into the molten salt, and this supply mode can be applied with no problem in the actual operation. It is also possible that the liquid or gaseous TiCl₄ is supplied to the liquid surface of the molten salt. The supply mode can also be applied with no problem.

In handling the Ti particles generated in the molten salt, it is also possible that the Ti particles are separated from the molten salt in the reactor cell. In this case, the production mode becomes the batch manner. In order to improve the productivity, the Ti particles and the molten salt can be separated from each other outside the reactor vessel by utilizing the Ti generated in the particulate form to discharge the Ti particles outside the reactor vessel along with the molten salt. The Ti particles can simply be separated from the molten salt by a squeezing operation by mechanical compression and the like.

In handling the Cl₂ generated in the electrolysis, it is preferable that TiCl₄ be used for the Ti generation reaction in the reactor vessel by causing Cl₂ to react with C and TiO₂ to form TiCl₄.

For the raw material of Ti, basically the TiCl₄ is used. However, Ti can also be produced by mixing TiCl₄ and another metallic chloride. Because TiCl₄ and another metallic chloride are simultaneously reduced by Ca, the Ti alloy particles can be produced by this method.

For a size of the generated Ti or Ti alloy, it is preferable that an average particle size ranges from 0.5 to 50 µm. This is because that the generated Ti or Ti alloy having the average particle size of 0.5 to 50 µm can flow along with the molten salt and be easily taken out from the reactor cell. When the average particle size is lower than 0.5 µm, it is difficult to separate the molten salt and Ti or the Ti alloy. When the average particle size is more than 50 µm, it is difficult to take out Ti or the Ti alloy and the molten salt from the reactor vessel.

In order to generate Ti or the Ti alloy having the average particle size of 0.5 to 50 µm, it is effective to manage Ca concentration to be not lower than 0.01% in the molten salt used in the Ti generation step. When the Ca concentration is lower than 0.01%, Ti is not generated but chlorides of a divalent or trivalent Ti are generated, which decreases the Ti generation efficiency. An upper limit of the Ca concentration is determined according to the molten salt composition and temperature. It is particularly preferable that the Ca concentration range be not lower than 0.3%. When the Ca concentration is not lower than 0.3%, even if the Ca concentration is locally decreased, Ti is stably generated and the decrease in Ti generation efficiency caused by the chlorides of divalent or trivalent Ti does not take place.

### BRIEF DESCRIPTION OF THE DRAWINGS

Fig. 1 is a block diagram showing Ti metals production apparatus according to an example of the present invention; and
Fig. 2 is a graph showing a relationship between a mixture ratio and a melting point in a mixed molten salt of CaCl₂ and NaCl.

### BESST MODE FOR CARRYING OUT THE INVENTION

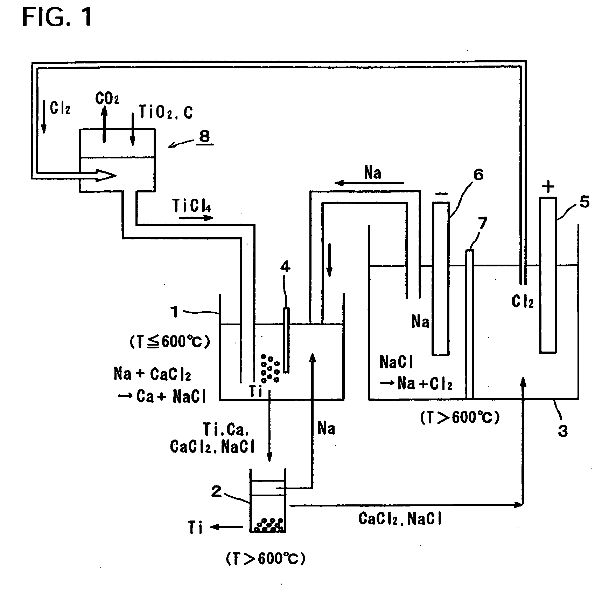

An example of the present invention will be described below with reference to the drawings. Fig. 1 is a block diagram showing Ti metals production apparatus according to an example of the present invention.

A reactor cell 1 in which Ti is generated by introducing Na, a separation cell 2 in which the generated Ti is separated, and an electrolytic cell 3 in which Na is generated are used in the example.

The reactor cell 1 holds a mixed molten salt of CaCl₂ and NaCl, which is of the molten salt. More specifically, in the mixed molten salt, CaCl₂ and NaCl are mixed together by a fraction in which a melting point becomes not more than 600 °C, and the reactor cell 1 holds the mixed molten salt at the temperature ranging from the melting point to 600 °C. The inside of the reactor cell 1 is separated into a Na introduction side and a raw material introduction side by a partition wall 4 except for a bottom portion.

In the reactor cell 1, the molten Na is introduced to the Na introduction side and the gaseous TiCl₄ which is of the Ti raw material is injected into the molten salt on the raw material introduction side in a dispersed manner. The molten salt temperature of not more than 600 °C causes the introduced Na to react with CaCl₂ in the molten salt to generate Ca (chemical formula (2)). Ca is dissolved in the molten salt to form CaCl₂ in which Ca having the high reactivity is dissolved.

On the raw material introduction side in reactor cell 1, the particulate metallic Ti is generated by reducing the TiCl₄ supplied to the molten salt with Ca dissolved in the molten salt. The generated Ti particles moves downward by the specific gravity difference and accumulated on the bottom on the raw material introduction side.

The Ti particles accumulated on the bottom on the raw material introduction side of the reactor cell 1 are discharged from the reactor cell 1 along with the molten salt existing on the bottom of the reactor cell 1, and the Ti particles and the molten salt are introduced to the separation cell 2. In the separation cell 2, the Ti particles discharged from the reactor cell 1 along with the molten salt are separated from the molten salt. Specifically the Ti particles are compressed to squeeze the molten salt. The obtained Ti particles are melted to yield a Ti ingot.

In the separation cell 2, the molten salt temperature is held at more than 600 °C. The molten salt extracted from the reactor cell 1 is already used, and the molten salt contains some amount of unreacted Ca although majority of Ca is consumed. When the molten salt temperature is held at more than 600 °C in the separation cell 2, the unreacted Ca is replaced by Na which is hardly dissolved in the molten salt, and Na is separated by Na floatation on the molten salt (chemical formula (3)).

The Ti particles and the molten salt in which Na is separated are introduced to the electrolytic cell 3. In the electrolytic cell 3, similarly to the separation cell 2, the molten salt temperature is held at more than 600 °C, at which Na is generated. Therefore, Na is produced by the electrolysis from NaCl in the molten salt. That is, NaCl in the molten salt is electrolyzed between an anode electrode 5 and a cathode electrode 6, the Cl₂ gas is generated on the side of the anode electrode 5, and Na is generated on the side of the cathode electrode 6.

The inside of the electrolytic cell 3 is separated into the anode electrode side and the cathode electrode side by a membrane 7. The molten salt from the separation cell 2 is introduced to the anode electrode side in the electrolytic cell 3. The membrane 7 blocks the movement of Na generated on the cathode electrode 6 to the side of the anode electrode 5 while permitting the molten salt to flow from the anode electrode side to the cathode electrode side.

At this point, when Na is mixed in the molten salt introduced to the anode electrode side in the electrolytic cell 3, the back reaction is generated by causing Na to react with the Cl₂ gas generated on the anode electrode side. However, in the example, the unreacted Ca in the molten salt and the Ti particles are removed from the molten salt in the form of Na in the separation cell 2. Therefore, the back reaction caused by the mixture of the unreacted Na in the anode electrode side in the electrolytic cell 3 and the decrease in current efficiency caused by the back reaction is prevented.

That is, the separation cell 2 is configured to be used in both the Ti separation step and the Na separation step, and the unreacted Ca in the molten salt is previously removed by replacing the unreacted Ca by Na before the molten salt extracted from the reactor cell 1 is introduced to the electrolytic cell 3, which allows the rational and economic operation to be performed. Na separated from the molten salt in the separation cell 2 is sent back to the Na introduction side in the reactor cell 1, and returns to Ca by managing the temperature to be not more than 600 °C, thus enabling to be reused for the reducing reaction.

On the other hand, the Cl₂ gas generated on the anode electrode side in the electrolytic cell 3 is sent to a chlorination step 8. In the chlorination step 8, the chlorination is performed to TiO₂ with C to generate TiCl₄ which is of the Ti raw material. The generated TiCl₄ is introduced to the reactor cell 1, and TiCl₄ is used in a circulating manner to generate the Ti particles by the Ca reduction. The by-product CO₂ is discharged to the outside of the system.

Thus, in the example, the Ti particles are generated by reducing the molten salt by the dissolved Ca in the reactor cell 1. Ca consumed in association with the generation of the Ti particles is replenished into the reactor cell 1 in the form of Na which is easy to handle. Therefore, it is not necessary that the solid-state Ca be replenished or taken out, and the high-quality Ti particles are produced continuously and economically through the Ca reduction.

Na is produced by electrolyzing the used molten salt in the electrolytic cell 3, and Na is used in the circulating manner, so that Na replenishment is not required from the outside. Accordingly the method of the present invention is particularly excellent for the economic efficiency.

Both the Ti separation and the Na separation are performed in the separation cell 2 to prevent the mixture of Na in the electrolytic cell 2, and Na generated on the cathode electrode side is prevented from flowing in the anode electrode side in the electrolytic cell 3. Therefore, the back reaction is effectively prevented in the electrolytic cell 3 to secure the high current efficiency.

In the reactor cell 1, the molten salt temperature is held to be not more than 600 °C, so that a reactor material life can be lengthened to reduce reactor material cost. Because Ca has the reactivity higher than that of Mg, development of the reactor material which can withstand Ca for long periods is the important technological problem in mass production of Ti or the Ti alloys. In this regard, the operation temperature of the molten salt is decreased to mitigate the impact on the reactor material by the low temperature reduction process with the temperature of not more than 600 °C, so that the present invention largely contributes to the solution of the problem of the reactor material life.

The molten salt temperature in the separation cell 2 is equalized to the temperature of the reactor cell 1 which is not more than 600 °C.

In the case where the molten salt temperature is controlled to be more than 600 °C in the separation cell 2 and the electrolytic cell 3, it is desirable that the upper limit of the molten salt temperature be not more than 800 °C from the viewpoints of thermal efficiency and reactor material durability. On the other hand, in the case where the molten salt temperature is managed to be not more than 600 °C, the lower limit of the molten salt temperature is the melting point of the salt to be used, and it is particularly preferable that the molten salt temperature be set at the melting point + 20 °C in consideration of existence of a temperature variation in the cell.

### INDUSTRIAL APPLICABILITY

The method for producing Ti or the Ti alloys through the reduction by Ca according to the present invention is the method for reducing TiCl₄, so that the high-purity Ti metals or Ti alloys can be produced. Ca is used as the reducing agent, and the metallic chloride containing TiCl₄ which is of the Ti raw material is caused to react with Ca in the molten salt in which CaCl₂ is contained and Ca is dissolved. Therefore, the feed rate of TiCl₄ can be increased. The Ti particles or the Ti alloy particles can be generated in the molten CaCl₂ solution, so that the continuous production can be performed. Ca is generated from Na which is easy to handle and Ca is dissolved in the molten salt, so that it is not necessary to replenish the expensive metallic Ca or it is not necessary to handle the single Ca which is difficult to handle due to the strong reactivity. Accordingly, the method for producing Ti or the Ti alloys according to the present invention can effectively be utilized as means for efficiently and economically producing the high-purity Ti metals or Ti alloys.

## Claims

1. A method for producing Ti or Ti alloys through reduction by Ca, **characterized by** including:
a Ca generation process by Na introduction, in which Ca is generated by introducing Na into molten salt containing CaCl₂, the molten salt being kept at temperatures not more than 600 °C;
a Ti generation process by a reducing reaction, in which Ti or the Ti alloy is generated in said molten salt by supplying metallic chloride containing TiCl₄ into said molten salt to cause the metallic chloride to react with Ca generated in said molten salt; and
a Ti separation process in which said Ti or Ti alloy generated in said molten salt is separated from said molten salt.

2. A method for producing Ti or Ti alloys through reduction by Ca according to claim 1, **characterized in that** the Ca generation process by Na introduction and the Ti generation process by the reducing reaction are performed in the same reaction apparatus.

3. A method for producing Ti or Ti alloys through reduction by Ca according to claim 1, **characterized by** including an electrolytic process in which Na is generated by electrolyzing the molten salt containing NaCl, wherein Na generated in the electrolytic process is introduced into said molten salt.

4. A method for producing Ti or Ti alloys through reduction by Ca according to claim 3, **characterized in that** the molten salt is held at temperatures more than 600 °C in said electrolytic process.

5. A method for producing Ti or Ti alloys through reduction by Ca according to claim 3, **characterized in that** the molten salt separated from said Ti or Ti alloy is supplied to said electrolytic process.

6. A method for producing Ti or Ti alloys through reduction by Ca according to claim 3, **characterized by** including a chloridization process in which TiCl₄ is generated by causing a Cl₂ gas to react with TiO₂, the Cl₂ gas being of by-product in association with said electrolysis, in that TiCl₄ generated in the chloridization process is used for the generation reaction of said Ti or Ti alloy.

7. A method for producing Ti or Ti alloys through reduction by Ca according to claim 5, **characterized by** including a Na separation process, in which a temperature of the molten salt separated from said Ti or Ti alloy is increased more than 600 °C to generate Na before the molten salt is supplied to said electrolytic process, and said molten salt is introduced to the electrolytic process after the generated Na is separated and removed.

8. A method for producing Ti or Ti alloys through reduction by Ca according to claim 7, **characterized in that** the Na separation process also acts as said Ti separation process.

9. A method for producing Ti or Ti alloys through reduction by Ca according to claim 1, **characterized in that** said molten salt containing CaCl₂ is a mixed molten salt containing CaCl₂ and NaCl at a ratio in which a melting point becomes not more than 600 °C.

10. A method for producing Ti or Ti alloys through reduction by Ca according to claim 9, **characterized in that** said mixed molten salt is a mixed molten salt containing at least one of KCl, LiCl, and CaF₂ at a ratio in which a melting point becomes not more than 600 °C.

11. A method for producing Ti or Ti alloys through reduction by Ca according to claim 1, **characterized in that** said metallic chloride containing TiCl₄ is a mixture containing TiCl₄ and another metallic chloride.

12. A method for producing Ti or Ti alloys through reduction by Ca according to claim 1, **characterized in that** the generated Ti or Ti alloy is particulate whose particle diameter ranges 0.5 to 50 µm on an average.

13. A method for producing Ti or Ti alloys through reduction by Ca according to claim 1, **characterized in that** a Ca concentration is managed at least 0.01% in the molten salt used in said Ti generation process.
